# FASCICULE DE BREVET EUROPEEN

(11) **EP 3 867 518 B1**
(45) Date de publication et mention de la délivrance du brevet: **23.07.2025**
(21) Numéro de dépôt: 19789975.0
(22) Date de dépôt: 17.10.2019
(51) Int. Cl.: F02M 43/00, F02M 25/025, F02M 25/022, F02B 47/02

(54) **SYSTÈME D'INJECTION D'UNE SOLUTION AQUEUSE DANS UN MOTEUR À COMBUSTION**
SYSTEM ZUR INJEKTION EINER WÄSSRIGEN LÖSUNG IN EINE BRENNKRAFTMASCHINE
SYSTEM FOR INJECTING AN AQUEOUS SOLUTION INTO A COMBUSTION ENGINE

(30) Priorité: 18.10.2018 FR 1859657
(43) Date de publication de la demande: 25.08.2021
(73) Titulaire: OPmobility C-Power Belgium Research, 1200 Woluwe-Saint-Lambert (BE)
(72) Inventeur: LEONARD, Stéphane, 1130 BRUXELLES (BE)
(74) Mandataire: LLR
(86) Numéro de dépôt international: PCT/EP2019/078262
(87) Numéro de publication internationale: WO 2020/079175

(56) Documents cités:
- EP-A1- 3 324 031
- WO-A1-2017/137100
- DE-A1- 102016 218 174
- DE-A1- 102017 202 434

## Description

L'invention concerne un système d'injection d'une solution aqueuse dans un moteur à combustion pour véhicule automobile et un procédé d'injection d'une solution aqueuse dans un moteur à combustion pour véhicule automobile. Plus particulièrement, l'invention concerne un système d'injection d'une solution aqueuse dans un moteur à combustion pour véhicule automobile comprenant un moyen de déminéralisation de la solution aqueuse.

L'invention peut être utilisée notamment à bord des véhicules automobiles comprenant un moteur à combustion, plus particulièrement à bord des véhicules automobiles comprenant un moteur essence turbocompressé à injection directe.

Il est connu d'injecter de l'eau dans le circuit d'admission d'air du moteur. En se mélangent au gaz d'admission, l'eau injectée permet de réduire les températures de combustion et les émissions de polluants appelés NOx, et d'augmenter les performances, par exemple, d'un moteur essence en diminuant la sensibilité au cliquetis. Un tel système d'injection est décrit dans le document de brevet FR2801076A1.

Cependant, pour assurer le bon fonctionnement d'un système d'injection traditionnel, il est connu de remplir le réservoir de stockage avec de l'eau déminéralisée afin de ne pas boucher le circuit d'injection avec du tartre. Cette solution est contraignante. En effet, l'utilisateur d'un véhicule automobile équipé d'un tel système d'injection doit prendre avec lui des bidons d'eau déminéralisée quand il part en voyage, car il faut prévoir environ 3 litres d'eau déminéralisée pour 1000 kilomètres parcourus. Certes, on peut acheter de l'eau déminéralisée dans les stations-service, mais l'utilisateur n'en trouvera pas dans toutes les stations-service.

Le document de brevet WO2017137100A1 prétend pallier l'inconvénient précité en proposant un système d'injection d'eau dans un moteur à combustion comprenant un moyen de déminéralisation de l'eau du robinet situé entre le réservoir et au moins un injecteur. Certes, cette proposition est séduisante mais en pratique l'eau injectée dans le circuit d'admission du moteur doit présenter une conductivité électrique inférieure ou égale à 50 microsiemens par centimètre (µS/cm) à 20 degrés Celsius (°C), voire - pour certains constructeurs automobiles - inférieure ou égale à 15 µS/cm à 20° C, or la conductivité électrique de l'eau du robinet peut facilement atteindre 1500 µS/cm à 20° C et rarement descendre au-dessous de 700 µS/cm. En pratique, quand une cartouche du type à résine échangeuse d'ions constitue le moyen de déminéralisation et qu'on veut réduire la taille de la cartouche au strict minimum pour une application automobile, l'eau qui traverse la cartouche doit la traverser lentement, autrement dit, avec un faible débit, afin de laisser le temps à la résine d'amener la conductivité électrique de l'eau du robinet à 50 µS/cm à 20°C, voire à 15 µS/cm à 20°C. Ceci n'est pas satisfaisant, car le débit d'eau pour une injection d'eau dans un moteur à combustion doit pouvoir atteindre 80 kg par heure. La solution qui consisterait à augmenter le débit d'eau dans la cartouche pour traverser rapidement la cartouche n'est pas plus satisfaisante, car elle ne permettrait pas d'amener la conductivité électrique de l'eau du robinet à 50 µS/cm à 20°C, voire à 15 µS/cm à 20°C sauf à augmenter considérablement la taille de la cartouche. Par l'expression « résine échangeuse d'ions », on entend désigner une résine du type cationique ou anionique ou un mélange de ces deux types de résines, préférentiellement un mélange de résine cationique et anionique ayant une capacité d'échange supérieure à 330 mEq où mEq représente la quantité en milligrammes d'un soluté égal à 1/1000 de son poids équivalent en grammes en tenant compte de la valence des ions.

L'invention a notamment pour objectif de pallier ces inconvénients de l'art antérieur. A cet effet, l'invention a pour objet un système d'injection d'une solution aqueuse dans un moteur à combustion pour véhicule automobile comprenant un réservoir d'une solution aqueuse, un moyen d'injection de la solution aqueuse dans un circuit de filtration connectant le réservoir à au moins un injecteur du moteur à combustion. Selon l'invention, le système d'injection comprend en outre un moyen de recirculation de la solution aqueuse dans le circuit de filtration et un dispositif de caractérisation de la solution aqueuse permettant de mesurer au moins une caractéristique de la solution aqueuse, le système permettant, en fonction de la caractéristique mesurée, d'injecter la solution aqueuse dans le moteur ou de faire recirculer la solution aqueuse dans le circuit de filtration.

Grâce à l'invention, l'utilisateur du véhicule est libre de remplir le réservoir avec de l'eau du robinet ou avec de l'eau déminéralisée du commerce. Dans tous les cas, le système d'injection selon l'invention empêche le circuit d'injection d'être entartré et assure une injection, au plus tôt, de l'eau déminéralisée dans le moteur. En effet, tant que l'eau qui sort du circuit de filtration ne présente pas des caractéristiques conformes à des caractéristiques attendues, l'eau est renvoyée dans le circuit de filtration pour traitement supplémentaire. Dès que l'eau qui sort du circuit de filtration présente des caractéristiques conformes à des caractéristiques attendues, l'eau est injectée dans le moteur par l'admission d'air du moteur.

Par l'expression « solution aqueuse », on entend désigner de l'eau ayant des caractéristiques (ou propriétés) physico-chimiques quelconques.

Par l'expression « eau déminéralisée du commerce », on entend désigner de l'eau ayant une conductivité électrique comprise entre 50 et 100 µS/cm à 20°C, par exemple de l'eau ayant une conductivité électrique égale à 100 µS/cm à 20°C.

Par l'expression « eau déminéralisée », on entend désigner de l'eau ayant une conductivité électrique inférieure ou égale à 15 µS/cm à 20° C.

Par l'expression « au plus tôt », on entend désigner de l'eau déminéralisée qui ne fait aucun détour ni aucune pause entre la sortie du réservoir et l'admission du moteur.

Selon l'invention :
- le dispositif de caractérisation comprend au moins un capteur de qualité apte à mesurer une caractéristique représentative de la qualité de la solution aqueuse. On appelle ici capteur de qualité de l'eau un capteur apte à mesurer une caractéristique (ou propriété) physico-chimique de l'eau donnant une information représentative de la concentration en ions de l'eau.
- le capteur de qualité peut être un capteur de conductivité électrique apte à mesurer la conductivité électrique de la solution aqueuse. Alternativement, le capteur de qualité peut être un capteur de résistivité électrique, un capteur d'impédance, un capteur de dureté, un capteur de densité, un capteur de turbidité, une sonde pH ou tout autre capteur apte à mesurer une propriété physico-chimique de la solution aqueuse caractéristique de la nature déminéralisée ou pas de la solution aqueuse.
- le capteur de qualité mesure ladite caractéristique de la solution aqueuse à une sortie du circuit de filtration. A cette fin, le capteur de qualité est agencé à la sortie du circuit de filtration. Selon des caractéristiques additionnelles de l'invention :
   - le dispositif de caractérisation comprend deux capteurs de qualité : un premier capteur de qualité placé dans le réservoir et un deuxième capteur de qualité agencé à la sortie du circuit de filtration. Cette configuration permet de comparer la qualité de l'eau à l'entrée et à la sortie du circuit de filtration.
   - le circuit de filtration est un circuit de filtration par adoucisseur. Ceci permet d'éliminer le calcaire et donc la cause originelle du tartre.
   - le circuit de filtration comprend un moyen de déminéralisation de la solution aqueuse. Ceci permet de débarrasser l'eau des ions entartrants tels que les ions calcium Ca⁺⁺ et les ions magnésium Mg⁺⁺.
   - le moyen de déminéralisation de la solution aqueuse comprend une résine échangeuse d'ions. Ceci permet d'échanger des ions entartrants contre des ions qui ne forment pas de tartre, par exemple, des ions hydrogène H⁺.
   - le moyen d'injection de la solution aqueuse comprend une pompe et un canal d'injection de la solution aqueuse à au moins un injecteur du moteur à combustion. Le moyen de recirculation de la solution aqueuse comprend une pompe et un conduit de renvoi de la solution aqueuse dans le réservoir. De préférence, la pompe du moyen d'injection est aussi la pompe du moyen de recirculation. Ceci permet de réduire le coût du système d'injection en limitant le nombre de composants.
   - le système d'injection selon l'invention comprend en outre une vanne comprenant une voie d'entrée connectée à la sortie du circuit de filtration, une première voie de sortie connectée au conduit de renvoi et une deuxième voie de sortie connectée au canal d'injection. Ceci permet de connecter la sortie du circuit de filtration au conduit de renvoi et au canal d'injection.
   - la vanne comprend un mécanisme d'ouverture/fermeture sélective de la première voie de sortie et de la deuxième voie de sortie, ledit mécanisme étant commandé par une unité de contrôle électronique (ECU) apte, d'une part, à fermer la première voie de sortie et à ouvrir la deuxième voie de sortie quand la caractéristique représentative de la qualité de la solution aqueuse mesurée par le capteur de qualité est dans une plage de valeurs de référence et, d'autre part, à ouvrir la première voie de sortie et à fermer la deuxième voie de sortie de la vanne quand la caractéristique représentative de la qualité de la solution aqueuse mesurée par le capteur de qualité est en dehors d'une plage de valeurs de référence.
   - le système d'injection selon l'invention comprend un réservoir d'une solution aqueuse, un circuit de filtration de la solution aqueuse comprenant une entrée de fluide et une sortie de fluide, le réservoir étant en communication de fluide avec le circuit de filtration à travers une pompe située entre une sortie du réservoir et l'entrée du circuit de filtration, un conduit de renvoi de la solution aqueuse dans le réservoir comprenant une entrée de fluide et une sortie de fluide, la sortie de fluide du conduit de renvoi étant en communication de fluide avec une entrée du réservoir, un canal d'injection de la solution aqueuse comprenant une entrée de fluide et une sortie de fluide, la sortie de fluide du canal d'injection d'eau étant en communication de fluide avec au moins un injecteur du moteur à combustion, le système comprend en outre un capteur de qualité de la solution aqueuse à la sortie du circuit de filtration.
   - le système d'injection comprend une vanne comprenant une voie d'entrée, une première voie de sortie et une deuxième voie de sortie, telle que la sortie du circuit de filtration est connectée de manière étanche à la première voie d'entrée de la vanne, et telle que l'entrée du conduit de renvoi est connectée de manière étanche à la première voie de sortie de la vanne et telle que l'entrée du canal d'injection est connecté de manière étanche à la deuxième voie de sortie de la vanne, la vanne comprend en outre un mécanisme d'ouverture/fermeture sélective de la première voie de sortie et de la deuxième voie de sortie de la vanne, ledit mécanisme est commandé par une unité de contrôle électronique (ECU) apte, d'une part, à fermer la première voie de sortie et à ouvrir la deuxième voie de sortie de la vanne quand une valeur caractéristique de la qualité de la solution aqueuse mesurée par le capteur de qualité à la sortie du circuit de filtration est dans une plage de valeurs de référence et, d'autre part, à ouvrir la première voie de sortie et à fermer la deuxième voie de sortie de la vanne quand la valeur caractéristique de la qualité de la solution aqueuse mesurée par le capteur de qualité à la sortie du circuit de filtration est en dehors d'une plage de valeurs de référence.
   - le système d'injection comprend :
      - une première vanne présentant une première voie d'entrée et une première voie de sortie, la première voie d'entrée étant connectée à la sortie du circuit de filtration, la première voie de sortie étant connectée au conduit de renvoi,
      - une seconde vanne présentant une seconde voie d'entrée et une seconde voie de sortie, la seconde voie d'entrée étant connectée à la sortie du circuit de filtration, la seconde voie de sortie étant connectée au canal d'injection.
   - la première vanne et la seconde vanne comprennent respectivement un mécanisme d'ouverture/fermeture de la première voie de sortie et de la seconde voie de sortie, lesdits mécanismes d'ouverture/fermeture étant commandés par une unité de contrôle électronique (ECU) apte, d'une part, à fermer la première voie de sortie de la première vanne et à ouvrir la seconde voie de sortie de la seconde vanne quand une caractéristique représentative de la qualité de la solution aqueuse mesurée par le capteur de qualité est dans une plage de valeurs de référence et, d'autre part, à ouvrir la première voie de sortie de la première vanne et à fermer la seconde voie de sortie de la seconde vanne quand une caractéristique représentative de la qualité de la solution aqueuse mesurée par le capteur de qualité est en dehors d'une plage de valeurs de référence.
   - la vanne est une électrovanne et le mécanisme d'ouverture/fermeture sélective est un servomoteur électrique. Ceci permet de contrôler la vanne au moyen d'une unité de contrôle électronique (ECU).
   - le système d'injection comprend un capteur de qualité dans le réservoir. Ce capteur permet, outre la mesure de la conductivité électrique, de vérifier que le produit qui est stocké dans le réservoir est bien une solution aqueuse et pas un autre produit comme par exemple une solution d'urée ou du carburant. Si tel était le cas, l'unité de contrôle électronique (ECU) en serait informée et empêcherait ce produit d'être injecté dans le moteur.
   - le moyen de déminéralisation est un filtre de déminéralisation de la solution aqueuse. Avantageusement, le filtre de déminéralisation est une cartouche amovible, de cette façon, on facilite la maintenance et le remplacement du filtre.
   - le circuit de filtration comprend un moyen de chauffage apte à chauffer la solution aqueuse. Ceci est particulièrement avantageux en hiver, quand il faut dégeler la solution aqueuse. Préférentiellement, le moyen de chauffage est choisi parmi un moyen de chauffage électrique et/ou un moyen de chauffage comportant un fluide caloporteur tel qu'un liquide de refroidissement du moteur ou un gaz d'échappement en provenance du moteur.

On prévoit aussi selon l'invention un procédé d'injection d'une solution aqueuse dans un moteur à combustion pour véhicule automobile comprenant les étapes successives suivantes :
a) Pomper la solution aqueuse contenue dans un réservoir,
b) Envoyer ladite solution aqueuse pompée dans un circuit de filtration comprenant un moyen de déminéralisation,
c) Mesurer au moins une valeur d'une caractéristique de la solution aqueuse à la sortie du circuit de filtration,
d) Renvoyer la solution aqueuse dans le réservoir et reprendre le procédé à l'étape a) si la valeur mesurée à l'étape c) est en dehors d'une plage de valeurs de référence, sinon aller à l'étape e),
e)
   e1) Injecter la solution aqueuse dans le moteur ou
   e2) mesurer au moins une valeur d'une caractéristique de la solution aqueuse dans le réservoir,
f) Reprendre le procédé à l'étape a) si la valeur mesurée à l'étape e2) est en dehors d'une plage de valeurs de référence, sinon arrêter le procédé.

Ainsi, le procédé d'injection selon l'invention permet de protéger les injecteurs du moteur contre le tartre tout en optimisant l'utilisation du moyen de déminéralisation par l'injection « au plus tôt » de la solution aqueuse dans le moteur.

On va maintenant décrire, à titre d'exemples non limitatifs, différents modes de réalisation de l'invention à l'aide des figures suivantes :
- la figure 1 est une vue schématique d'un système d'injection illustrant un moyen de déminéralisation dans un canal d'injection,
- la figure 2 illustre par un graphique la variation de la conductivité électrique de l'eau du robinet dans un système « simple passe ».
- la figure 3 illustre par un graphique la variation de la conductivité électrique de l'eau déminéralisée du commerce dans un système « simple passe ».
- la figure 4 est une vue schématique d'un système d'injection illustrant un moyen de déminéralisation dans un conduit de renvoi.
- la figure 5 illustre par un graphique la variation de la conductivité électrique de l'eau du robinet dans un système « multipasse ».
- la figure 6 illustre par un graphique la variation de la conductivité électrique de l'eau déminéralisée du commerce dans un système « multipasse ».
- la figure 7 est une vue schématique d'un premier mode de réalisation d'un système d'injection selon l'invention revendiquée.
- la figure 8 est une vue schématique d'un deuxième mode de réalisation d'un système d'injection selon l'invention revendiquée.

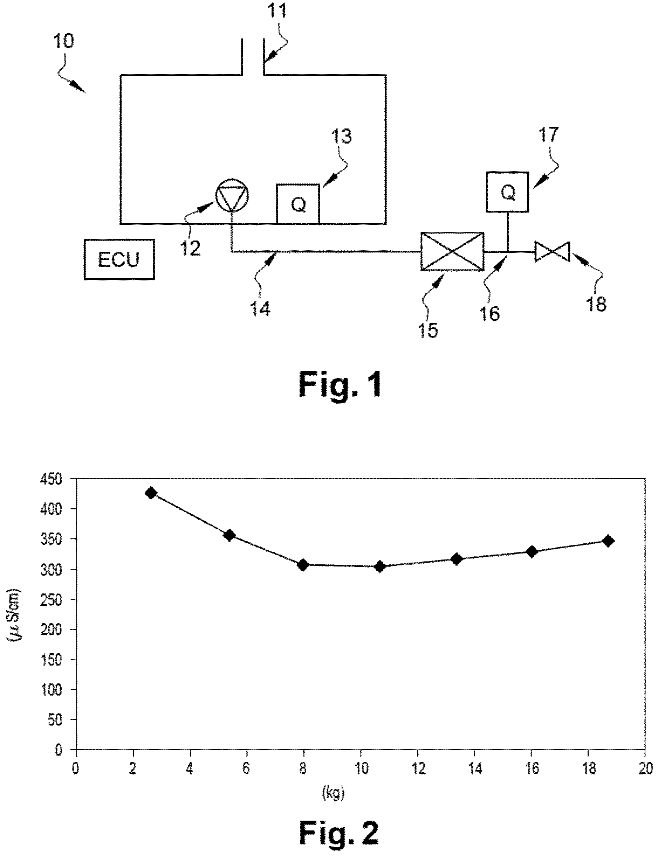

La figure 1 est une représentation schématique d'un système d'injection d'eau dans un moteur à combustion pour véhicule automobile. Ce système qu'on appellera « simple passe » comprend un réservoir d'eau 10 muni d'une tubulure de remplissage 11 du réservoir, une pompe 12 pour pomper l'eau stockée dans le réservoir et l'envoyer à l'entrée d'un circuit de filtration 14, un canal d'injection 16 d'eau à la sortie du circuit de filtration 14, un premier capteur de qualité 13 pour mesurer la qualité de l'eau dans le réservoir et un deuxième capteur de qualité 17 pour mesurer la qualité de l'eau à la sortie du circuit de filtration 14.

La qualité de l'eau peut être caractérisée par différentes caractéristiques de l'eau, aussi appelées propriétés physico-chimiques de l'eau. Parmi ces caractéristiques, on peut citer la conductivité électrique, la résistivité électrique, l'impédance, la dureté, la densité, la turbidité ou le pH. Dans la suite des exemples, la caractéristique retenue est la conductivité électrique de l'eau.

Dans le système d'injection de la figure 1, un filtre 15 de déminéralisation de l'eau est placé dans le circuit de filtration 14 afin de déminéraliser l'eau du réservoir avant de l'envoyer à l'admission du moteur (non représenté). Le filtre 15 est un filtre à cartouche du type à résines échangeuses d'ions. Le premier capteur de qualité 13 indique la conductivité électrique de l'eau stockée dans le réservoir 10. Le deuxième capteur de qualité 17 indique la conductivité électrique de l'eau à la sortie du circuit de filtration 14.

L'eau déminéralisée qui entre dans le circuit d'admission du moteur doit présenter une conductivité électrique inférieure ou égale à une valeur de référence, typiquement, 15 µS/cm à 20°C. Ainsi, tant que la conductivité électrique de l'eau est inférieure ou égale à la valeur de référence, l'eau qui sort du circuit de filtration 14 est injectée dans le moteur, via le canal d'injection 16. Dès que la conductivité électrique mesurée par le capteur de qualité 17 est supérieure à la valeur de référence, une unité de contrôle électronique (ECU) commande l'arrêt de la pompe 12 ainsi que la fermeture d'une vanne deux voies 18 située dans le canal d'injection 16, entre le filtre 15 et un injecteur du moteur à combustion (non représenté). En pratique, la vanne 18 est une électrovanne associée à un injecteur pour former un injecteur électrique à électrovanne.

L'eau du robinet présente généralement une conductivité électrique supérieure à 700 µS/cm à 20°C tandis que l'eau déminéralisée qu'on trouve dans le commerce présente une conductivité électrique inférieure à 100 µS/cm à 20°C. Ainsi, selon que le réservoir 10 est rempli avec de l'eau du robinet ou avec de l'eau déminéralisée du commerce, la durée de vie du filtre de déminéralisation 15 varie.

La figure 2 illustre par un graphique la variation, dans un système « simple passe », de la conductivité électrique de l'eau du robinet en fonction de la quantité d'eau traitée par le filtre de déminéralisation 15 pour un volume donné d'eau dans le réservoir, un débit donné d'eau à travers la pompe 12 et un filtre 15 donné. Dans ce premier test en laboratoire, la conductivité électrique initiale de l'eau est de 708 µS/cm, le volume d'eau dans le réservoir est de 20 litres, le débit d'eau à travers le filtre 15 de déminéralisation est de 80 kg par heure. On constate que la conductivité électrique baisse rapidement de 708 µS/cm à 426 µS/cm dès le traitement de 2,7 kg d'eau par le filtre 15. « Rapidement » veut dire ici en deux minutes ou moins. Toutefois, la conductivité électrique de l'eau ne baisse pas assez pour atteindre la valeur de référence de 15 µS/cm à 20°C. En effet, la valeur de la conductivité électrique la plus faible atteinte ici est de 304 µS/cm après traitement de 10,7 kg d'eau, cette conductivité électrique est encore trop élevée pour autoriser l'injection de l'eau dans un moteur à combustion. Par conséquent, un système « simple passe » tel que celui décrit dans le document de brevet WO2017137100A1 ne permet pas, en pratique, de déminéraliser l'eau du robinet pour être injectée dans un moteur. « En pratique » veut dire ici avec un volume de résine échangeuse d'ions raisonnable, par exemple 1 à 2 dm³, pour un débit d'injection d'eau dans le moteur devant pouvoir atteindre 80 kg d'eau par heure.

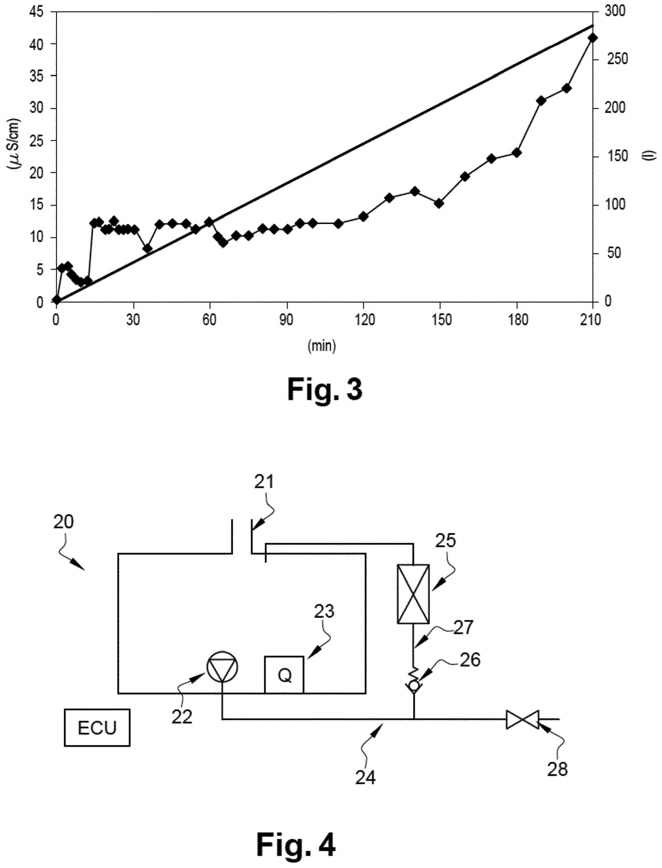

La figure 3 illustre par un graphique la variation, dans un système « simple passe », de la conductivité électrique de l'eau déminéralisée du commerce mesurée en fonction du temps, pour un volume donné d'eau dans le réservoir 10, un débit donné d'eau à travers la pompe 12 et un filtre 15 donné. Dans ce deuxième test en laboratoire, on se place dans les mêmes conditions opératoires que le premier test (voir figure 2), il n'y a que la conductivité électrique initiale de l'eau qui change, elle est ici de 100 µS/cm. La courbe qui relie les nombreux points représente l'évolution de la conductivité électrique de l'eau à la sortie du filtre 15 en fonction du temps. On constate que la conductivité électrique est amenée sans délai de 100 µS/cm à moins de 15 µS/cm à la sortie du filtre 15. Par l'expression « sans délai », on entend désigner un traitement de déminéralisation de l'eau qui permet d'atteindre instantanément, ou quasiment instantanément, la valeur de référence sans traitement supplémentaire. La droite qui passe par l'origine représente la quantité d'eau traitée mesurée en fonction du temps. On constate que la conductivité électrique de l'eau dépasse et reste supérieure à la valeur de référence de 15 µS/cm après traitement de 170 kg d'eau. Par conséquent, un système « simple passe » permet, d'une part, de traiter sans délai de l'eau déminéralisée du commerce afin de l'injecter au plus tôt dans un moteur et, d'autre part, de traiter une quantité satisfaisante d'eau déminéralisée du commerce avant épuisement du filtre. Par l'expression « épuisement du filtre », on entend désigner le fait qu'un filtre, chargé de maintenir une propriété physico-chimique d'une solution aqueuse dans une plage de valeurs de référence, n'est plus capable de remplir sa charge. Dans l'exemple précédent, l'épuisement du filtre est constaté par le fait que la conductivité électrique de l'eau dépasse et reste supérieure à la valeur de référence de 15 µS/cm à 20°C après le passage de 170 kg d'eau à travers le filtre 15.

En conclusion des premier et deuxième tests, un système « simple passe » est très efficace pour traiter sans délai une quantité satisfaisante d'eau déminéralisée du commerce (170 kg) mais se montre, en pratique, incapable de traiter de l'eau du robinet.

La figure 4 est une représentation schématique d'un autre système d'injection d'eau dans un moteur à combustion pour véhicule automobile. Ce système qu'on appellera « multipasse » comprend un réservoir d'eau 20 muni d'une tubulure de remplissage 21 du réservoir, une pompe 22 pour pomper l'eau stockée dans le réservoir et l'envoyer à l'entrée d'un canal d'injection d'eau 24, un injecteur électrique à électrovanne 28 à la sortie du canal d'injection 24 pour autoriser ou non l'injection d'eau dans un moteur à combustion (non représenté), un conduit de renvoi 27 de l'eau dans le réservoir comprenant une entrée d'eau connectée au canal d'injection 24 via un clapet anti-retour avec tarage 26, et une sortie d'eau connectée à une entrée dans le réservoir 20, un capteur de qualité 23 pour mesurer la qualité de l'eau dans le réservoir. Dans ce mode de réalisation, un filtre 25 de déminéralisation de l'eau est placé dans le conduit de renvoi 27 afin de déminéraliser l'eau renvoyée dans le réservoir. Le filtre 25 est un filtre à cartouche du type à résines échangeuses d'ions. Le capteur de qualité 23 indique la conductivité électrique de l'eau stockée dans le réservoir 20.

L'eau déminéralisée qui entre dans le circuit d'admission du moteur doit présenter une conductivité électrique inférieure ou égale à une valeur de référence, typiquement, 15 µS/cm à 20°C. Ainsi, tant que la conductivité électrique de l'eau est inférieure ou égale à la valeur de référence, l'électrovanne 28 reste ouverte permettant ainsi à l'eau qui sort du circuit d'injection 24 d'être injectée dans le moteur. Dès que la conductivité électrique mesurée par le capteur de qualité 23 est supérieure à la valeur de référence, une unité de contrôle électronique (ECU) commande la fermeture de l'électrovanne 28. La pompe 22 continuant à fonctionner, la pression dans le canal d'injection 24 augmente jusqu'à atteindre la pression de tarage du clapet anti-retour 26 ouvrant ainsi le passage dans le conduit de renvoi 27. L'eau ainsi pompée passe dans le conduit de renvoi 27 où elle est filtrée dans le filtre de déminéralisation 25 avant d'être renvoyée dans le réservoir 20. Ainsi, tant que la conductivité électrique de l'eau stockée dans le réservoir est supérieure à la valeur de référence, l'électrovanne 28 reste fermée, la pompe 22 continue de fonctionner et le clapet du clapet anti-retour reste ouvert créant ainsi une recirculation de l'eau du réservoir à travers le filtre 25, c'est-à-dire une circulation en boucle fermée de l'eau du réservoir à travers le filtre 25.

A l'instar d'un système « simple passe », selon que le réservoir 20 est rempli avec de l'eau du robinet ou avec de l'eau déminéralisée du commerce, la durée de vie du filtre de déminéralisation 25 varie.

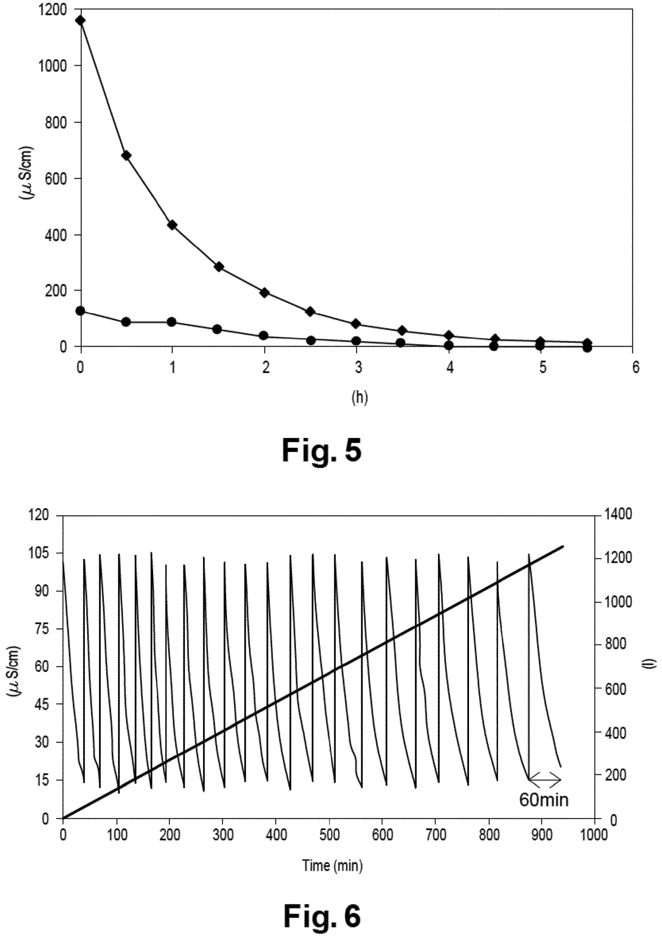

La figure 5 illustre par un graphique la variation, dans un système « multipasse », de la conductivité électrique de l'eau du robinet mesurée en fonction du temps, pour un volume donné d'eau dans le réservoir, un débit donné d'eau à travers la pompe 22 et un filtre 25 donné. Dans ce troisième test en laboratoire, la conductivité électrique initiale de l'eau est de 1163 µS/cm, le volume d'eau dans le réservoir est de 10 litres et le débit d'eau à travers le filtre 25 de déminéralisation est de 10 kg par heure. La courbe du haut représente l'évolution de la conductivité électrique de l'eau stockée dans le réservoir 20 en fonction du temps. On constate que cette conductivité électrique baisse de 1163 µS/cm à 15 µS/cm au bout de 5,5 heures. Autrement dit, il faut faire recirculer l'eau du réservoir pendant 5,5 heures avant d'atteindre la valeur de référence, ce qui n'est pas satisfaisant. En revanche, sur la courbe du bas qui représente la conductivité électrique de l'eau mesurée à la sortie du filtre 25, on constate que cette conductivité électrique atteint plus rapidement la valeur de référence puisque celle-ci est atteinte au bout de 3 heures. Par conséquent, un système « multipasse » permet, dans un temps raisonnable, de déminéraliser de l'eau du robinet pour être injectée dans un moteur.

La figure 6 illustre par un graphique la variation, dans un système « multipasse », de la conductivité électrique de l'eau déminéralisée du commerce mesurée en fonction du temps, pour un volume donné d'eau dans le réservoir, un débit donné d'eau à travers la pompe 22 et un filtre 25 donné. Dans ce quatrième test en laboratoire, comparé au troisième test en laboratoire (voir figure 5), la conductivité électrique initiale de l'eau, le volume d'eau dans le réservoir et le débit d'eau à travers la pompe 22 ont changé, la conductivité électrique initiale est ici de 100 µS/cm, le volume d'eau est de 20 litres et le débit est de 80 kg par heure. La courbe en pics représente l'évolution de la conductivité électrique de l'eau stockée dans le réservoir 20 en fonction du temps. On constate qu'après 0,5 heure de recirculation de l'eau à travers le filtre 25, la conductivité électrique atteint la valeur de référence de 15 µS/cm. Pour les besoins de ce test, dès que la conductivité électrique a atteint la valeur de référence, on recommence un nouveau cycle où le réservoir est vidé puis rempli de nouveau avec de l'eau déminéralisée présentant une conductivité électrique initiale de 100 µS/cm, puis on fait recirculer l'eau dans le réservoir jusqu'à atteindre de nouveau la valeur de référence. On répète ce cycle plusieurs fois jusqu'à ce que la valeur de référence ne soit plus atteignable. Chaque pic supérieur, respectivement inférieur, représente le début, respectivement la fin, d'un cycle. On constate que le temps nécessaire pour traiter l'eau déminéralisée, c'est-à-dire pour amener sa conductivité électrique à la valeur de référence, augmente progressivement de 0,5 heure à une heure au bout de vingt-deux cycles. C'est seulement après vingt-deux cycles et 15,6 heures de recirculation de l'eau à travers le filtre 25 que la conductivité électrique de l'eau dépasse et reste supérieure à la valeur de référence de 15 µS/cm à 20°C. Toutefois, en pratique, on considère qu'un cycle ne doit pas dépasser 0,5 heure or, on voit sur la courbe en pics que cette condition est remplie pour les dix premiers cycles mais pas pour les suivants. La droite qui passe par l'origine représente la quantité d'eau traitée en fonction du temps, on voit que 440 kg d'eau ont été traités au bout de dix cycles. Par conséquent, un système « multipasse » permet, d'une part, d'injecter de l'eau déminéralisée du commerce dans un moteur en un temps acceptable après le démarrage du moteur et, d'autre part, de traiter une quantité importante d'eau déminéralisée du commerce avant épuisement du filtre.

En conclusion des troisième et quatrième tests, un système « multipasse » est particulièrement efficace pour, d'une part, traiter une grande quantité d'eau déminéralisée du commerce (440 kg) en un temps acceptable (0,5 heure) et, d'autre part, pour traiter l'eau du robinet en un temps raisonnable (3 heures).

Néanmoins, aucun des systèmes d'injection qu'il soit « simple passe » ou « multipasse » n'est capable à lui seul de traiter sans délai une quantité satisfaisante d'eau déminéralisée du commerce, et, alternativement, traiter de l'eau du robinet en un temps raisonnable. Par l'expression « sans délai », on entend désigner un traitement de déminéralisation de l'eau qui permet d'atteindre instantanément, ou quasiment instantanément, la valeur de référence sans traitement supplémentaire. Par l'expression « quantité satisfaisante » on entend désigner une quantité de l'ordre de 170 kg. Par l'expression « temps raisonnable », on entend désigner une durée de trois heures ou moins.

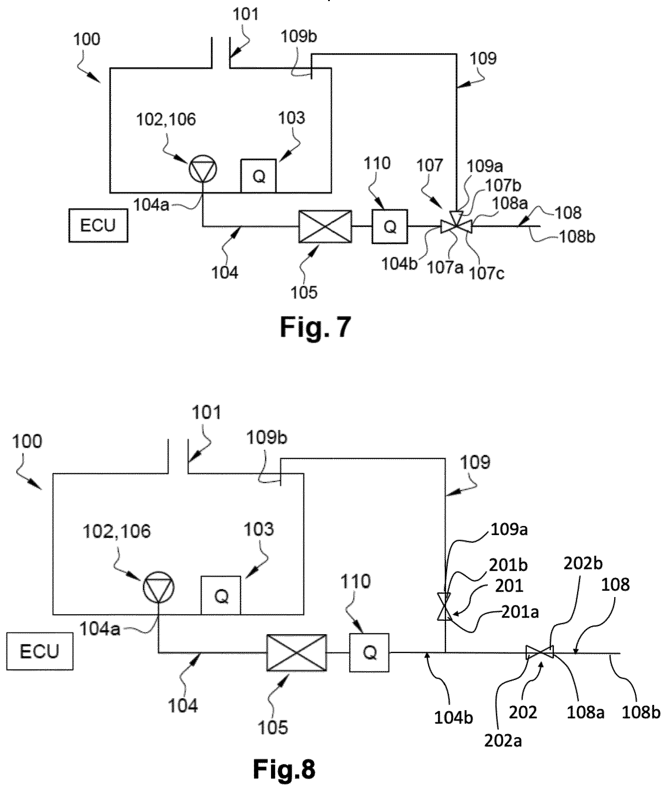

La figure 7 est une représentation schématique d'un premier mode de réalisation d'un système d'injection d'eau dans un moteur à combustion pour véhicule automobile conforme à l'invention. Ce système qu'on appellera à « passe séquentielle » comprend un réservoir 100 d'une solution aqueuse muni d'une tubulure de remplissage 101 du réservoir, un moyen d'injection de la solution aqueuse dans un circuit de filtration 104 connectant le réservoir 100 à au moins un injecteur du moteur à combustion (non représenté). Le moyen d'injection de la solution aqueuse comprend une pompe 102 et un canal d'injection 108. La pompe 102 sert à pomper l'eau stockée dans le réservoir 100 et l'envoyer à une entrée 104a du circuit de filtration 104 et le canal d'injection 108 sert à injecter la solution aqueuse audit au moins un injecteur du moteur à combustion.

Le système d'injection comprend en outre un moyen de recirculation de la solution aqueuse dans le circuit de filtration 104 et un dispositif de caractérisation de la solution aqueuse permettant de mesurer au moins une caractéristique de la solution aqueuse, le système permettant, en fonction de la caractéristique mesurée, d'injecter la solution aqueuse dans le moteur ou de faire recirculer la solution aqueuse dans le circuit de filtration 104. Ledit moyen de recirculation de la solution aqueuse comprend une pompe 106 et un conduit de renvoi 109 de la solution aqueuse dans le réservoir 100. Avantageusement, la pompe 102 du moyen d'injection est aussi la pompe 106 du moyen de recirculation de la solution aqueuse. Ledit dispositif de caractérisation comprend au moins un capteur de qualité 110 apte à mesurer une caractéristique représentative de la qualité de la solution aqueuse à une sortie 104b du circuit de filtration 104.

Préférentiellement, le système selon l'invention comprend deux capteurs de qualité, un premier capteur de qualité 103 pour mesurer la conductivité électrique de l'eau stockée dans le réservoir 100 et un deuxième capteur de qualité 110 pour mesurer la conductivité électrique de l'eau à une sortie 104b du circuit de filtration 104. Avantageusement, le premier capteur de qualité 103 permet aussi de vérifier que le produit qui est stocké dans le réservoir 100 est bien une solution aqueuse et pas un autre produit comme par exemple une solution d'urée ou du carburant. Si tel était le cas, l'unité de contrôle électronique (ECU) en serait informée et empêcherait ce produit d'être injecté dans le moteur.

Le circuit de filtration 104 comprend un filtre 105 de déminéralisation de la solution aqueuse afin de déminéraliser l'eau du réservoir avant de l'envoyer à l'admission du moteur. Avantageusement, le filtre de déminéralisation est une cartouche amovible. Préférentiellement, le moyen de déminéralisation 105 de la solution aqueuse comprend une résine échangeuse d'ions. Avantageusement, le circuit de filtration comprend un moyen de chauffage (non représenté) apte à chauffer la solution aqueuse. Préférentiellement, le moyen de chauffage est choisi parmi un moyen de chauffage électrique et/ou un moyen de chauffage comportant un fluide caloporteur tel qu'un liquide de refroidissement du moteur ou un gaz d'échappement en provenance du moteur.

Le système selon l'invention comprend en outre une vanne 107 comprenant une voie d'entrée 107a et deux voies de sortie 107b et 107c. La voie d'entrée 107a de la vanne 107 est connectée à la sortie 104b du circuit de filtration 104. La première voie de sortie 107b de la vanne 107 est connectée à une entrée 109a du conduit de renvoi 109 de l'eau dans le réservoir 100. La deuxième voie de sortie 107c de la vanne 107 est connectée à une entrée 108a du canal d'injection 108 d'eau dans le moteur. La vanne 107 comprend un mécanisme d'ouverture/fermeture sélective de la première voie de sortie 107b et de la deuxième voie de sortie 107c, ledit mécanisme étant commandé par une unité de contrôle électronique (ECU) apte, d'une part, à fermer la première voie de sortie 107b et à ouvrir la deuxième voie de sortie 107c quand une caractéristique représentative de la qualité de la solution aqueuse mesurée par le capteur de qualité 110 est dans une plage de valeurs de référence et, d'autre part, à ouvrir la première voie de sortie 107b et à fermer la deuxième voie de sortie 107c de la vanne 107 quand une caractéristique représentative de la qualité de la solution aqueuse mesurée par le capteur de qualité 110 est en dehors d'une plage de valeurs de référence.

Ainsi, tant que la conductivité électrique de l'eau qui sort du circuit de filtration 104 est inférieure ou égale à une valeur de référence, par exemple, 15 µS/cm à 20°C, la première sortie 107b de la vanne 107 reste fermée et la deuxième sortie 107c de la vanne 107 reste ouverte permettant ainsi à l'eau qui sort du circuit de filtration 104 d'être dirigée vers une sortie 108b du canal d'injection 108 pour être injectée au plus tôt dans le moteur. Dès que la conductivité électrique mesurée par le capteur de qualité 110 est supérieure à la valeur de référence, une unité de contrôle électronique (ECU) commande l'ouverture de la première sortie 107b et la fermeture de la deuxième sortie 107c de la vanne 107. La pompe 102 continuant à fonctionner, l'eau qui sort du circuit de filtration 104 est dirigée dans le conduit de renvoi 109 pour être renvoyée dans le réservoir 100.

Ainsi, tant que la conductivité électrique de l'eau mesurée à la sortie 104b du circuit de filtration 104 est supérieure à la valeur de référence, la première sortie 107b de la vanne 107 reste ouverte, la deuxième sortie 107c de la vanne 107 reste fermée et la pompe 102 continue de fonctionner créant ainsi une recirculation de l'eau du réservoir à travers le filtre 105, c'est-à-dire une circulation en boucle fermée de l'eau du réservoir à travers le filtre 105.

Avantageusement, la vanne trois voies 107 possède une position fermée dans laquelle l'entrée 107a de la vanne est fermée pour empêcher l'eau qui sort du circuit de filtration 104 d'être envoyée dans le circuit de dérivation 109 ou dans le moteur. Cette position sert à protéger le moteur en cas de fuite d'un ou plusieurs injecteurs du moteur.

La figure 8 est une représentation schématique d'un deuxième mode de réalisation d'un système d'injection d'eau dans un moteur à combustion pour véhicule automobile conforme à l'invention, également à « passe séquentielle ». Ce deuxième mode de réalisation diffère du premier mode de réalisation en ce que le système comprend une première vanne 201 présentant une première voie d'entrée 201a et une première voie de sortie 201b. La première voie d'entrée 201a de la première vanne 201 est connectée à la sortie 104b du circuit de filtration 104. La première voie de sortie 201b de la première vanne 201 est connectée à une entrée 109a du conduit de renvoi 109 de l'eau dans le réservoir 100. Le système comprend en outre une seconde vanne 202 présentant une seconde voie d'entrée 202a et une seconde voie de sortie 202b. La seconde voie d'entrée 202a de la seconde vanne 202 est également connectée à la sortie 104b du circuit de filtration 104. La seconde voie de sortie 202b de la seconde vanne 202 est connectée à une entrée 108a du canal d'injection 108 d'eau dans le moteur. La première vanne 201 et la seconde vanne 202 comprennent respectivement un mécanisme d'ouverture/fermeture de la première voie de sortie 201b et de la seconde voie de sortie 202b, lesdits mécanismes d'ouverture/fermeture étant commandés par une unité de contrôle électronique (ECU) apte, d'une part, à fermer la première voie de sortie 201b de la première vanne 201 et à ouvrir la seconde voie de sortie 202b de la seconde vanne 202 quand une caractéristique représentative de la qualité de la solution aqueuse mesurée par le capteur de qualité 110 est dans une plage de valeurs de référence et, d'autre part, à ouvrir la première voie de sortie 201b de la première vanne 201 et à fermer la seconde voie de sortie 202b de la seconde vanne 202 quand une caractéristique représentative de la qualité de la solution aqueuse mesurée par le capteur de qualité 110 est en dehors d'une plage de valeurs de référence.

Ainsi, tant que la conductivité électrique de l'eau qui sort du circuit de filtration 104 est inférieure ou égale à une valeur de référence, par exemple, 15 µS/cm à 20°C, la première voie de sortie 201b de la première vanne 201 reste fermée et la seconde voie de sortie 202b de la seconde vanne 202 reste ouverte permettant ainsi à l'eau qui sort du circuit de filtration 104 d'être dirigée vers une sortie 108b du canal d'injection 108 pour être injectée au plus tôt dans le moteur. Dès que la conductivité électrique mesurée par le capteur de qualité 110 est supérieure à la valeur de référence, une unité de contrôle électronique (ECU) commande l'ouverture de la première voie de sortie 201b de la première vanne 201 et la fermeture de la seconde voie de sortie 202b de la seconde vanne 202. La pompe 102 continuant à fonctionner, l'eau qui sort du circuit de filtration 104 est dirigée dans le conduit de renvoi 109 pour être renvoyée dans le réservoir 100.

Ainsi, tant que la conductivité électrique de l'eau mesurée à la sortie 104b du circuit de filtration 104 est supérieure à la valeur de référence, la première voie de sortie 201b de la première vanne 201 reste ouverte, la seconde voie de sortie 202b de la seconde vanne 202 reste fermée et la pompe 102 continue de fonctionner créant ainsi une recirculation de l'eau du réservoir à travers le filtre 105, c'est-à-dire une circulation en boucle fermée de l'eau du réservoir à travers le filtre 105.

En conclusion, un système d'injection à « passe séquentielle » se montre très efficace, d'une part, pour traiter sans délai une quantité satisfaisante d'eau déminéralisée du commerce et, d'autre part, pour traiter de l'eau du robinet en un temps raisonnable.

Grâce à l'invention, que l'eau stockée dans le réservoir soit de l'eau déminéralisée du commerce ou de l'eau du robinet, celle-ci est injectée au plus tôt dans le moteur à combustion. Un autre intérêt de l'invention est qu'elle permet de prolonger la durée de vie du filtre et donc d'espacer les visites chez le concessionnaire pour remplacer le filtre.

Bien entendu, l'invention n'est pas limitée aux exemples de réalisation mentionnés ci-dessus.

L'invention s'applique également à un procédé d'injection d'une solution aqueuse dans un moteur à combustion pour véhicule automobile comprenant les étapes successives suivantes :
a) Pomper la solution aqueuse contenue dans un réservoir 100,
b) Envoyer ladite solution aqueuse pompée dans un circuit de filtration 104 comprenant un moyen de déminéralisation 105,
c) Mesurer au moins une valeur d'une caractéristique de la solution aqueuse à la sortie du circuit de filtration 104,
d) Renvoyer la solution aqueuse dans le réservoir et reprendre le procédé à l'étape a) si la valeur mesurée à l'étape c) est en dehors d'une plage de valeurs de référence, sinon aller à l'étape e),
e)
   e1) Injecter la solution aqueuse dans le moteur ou
   e2) mesurer au moins une valeur d'une caractéristique de la solution aqueuse dans le réservoir 100,
f) Reprendre le procédé à l'étape a) si la valeur mesurée à l'étape e2) est en dehors d'une plage de valeurs de référence, sinon arrêter le procédé.

Ainsi, le procédé d'injection selon l'invention permet de protéger les injecteurs du moteur contre le tartre tout en optimisant l'utilisation du moyen de déminéralisation par l'injection « au plus tôt » de la solution aqueuse dans le moteur. En effet, quand une unité de contrôle électronique (ECU) détermine que toutes les conditions sont réunies pour mélanger de l'eau au gaz d'admission du moteur, de l'eau déminéralisée est injectée dans le moteur. Toutefois, il se peut que toutes les conditions soient réunies sauf une, par exemple, l'utilisateur du véhicule ne roule pas assez vite pour qu'il soit nécessaire d'injecter de l'eau dans le moteur. Dans ce cas, l'unité de contrôle électronique (ECU) peut décider de poursuivre le traitement de déminéralisation de l'eau stockée dans le réservoir même si l'eau qui sort du circuit de filtration présente des caractéristiques conformes à des caractéristiques attendues. Ce scénario est envisagé quand l'eau stockée dans le réservoir ne présente pas des caractéristiques conformes à des caractéristiques attendues. Par cette disposition, on réalise un prétraitement de l'eau stockée dans le réservoir ce qui permet de réduire, ultérieurement, le temps de traitement de cette eau et donc d'assurer son injection au plus tôt dans le moteur.

## Revendications

1. Système d'injection d'une solution aqueuse dans un moteur à combustion pour véhicule automobile, ledit système comprenant un réservoir (100) pour la solution aqueuse, un moyen d'injection de la solution aqueuse depuis le réservoir (100) dans un circuit de filtration (104) connectant le réservoir (100) à au moins un injecteur du moteur à combustion, ledit système comprenant en outre :
- un moyen de recirculation de la solution aqueuse dans le circuit de filtration (104), la recirculation de la solution aqueuse étant une circulation en boucle fermée de la solution aqueuse depuis le réservoir (100) à travers un filtre ( 105) et vers le réservoir (100) et
- un dispositif de caractérisation de la solution aqueuse permettant de mesurer au moins une caractéristique de la solution aqueuse,
**caractérisé en ce que** :
le dispositif de caractérisation comprend au moins un capteur de qualité (110) apte à mesurer une caractéristique représentative de la qualité de la solution aqueuse à une sortie (104b) du circuit de filtration,
ledit système permettant, en fonction de ladite caractéristique mesurée, d'injecter la solution aqueuse dans le moteur ou de faire recirculer la solution aqueuse dans le circuit de filtration (104).

2. Système d'injection selon la revendication 1, tel que le capteur de qualité (110) est apte à mesurer la conductivité électrique de la solution aqueuse.

3. Système d'injection selon la revendication 1 ou 2, comprenant un autre capteur de qualité (103) apte à mesurer une caractéristique de la solution aqueuse dans le réservoir (100).

4. Système d'injection selon l'une quelconque des revendications précédentes, tel que le circuit de filtration (104) comprend un moyen de déminéralisation (105) de la solution aqueuse.

5. Système d'injection selon la revendication précédente, tel que le moyen de déminéralisation (105) de la solution aqueuse comprend une résine échangeuse d'ions.

6. Système d'injection selon l'une quelconque des revendications précédentes, tel que le moyen d'injection de la solution aqueuse comprend une pompe (102) et un canal d'injection (108) de la solution aqueuse à au moins un injecteur du moteur à combustion, et tel que le moyen de recirculation de la solution aqueuse comprend une pompe (106) et un conduit de renvoi (109) de la solution aqueuse dans le réservoir (100), de préférence la pompe (102) du moyen d'injection est aussi la pompe (106) du moyen de recirculation de la solution aqueuse.

7. Système d'injection selon la revendication précédente, **caractérisé en ce qu'**il comprend en outre une vanne (107) comprenant une voie d'entrée (107a) connectée à la sortie (104b) du circuit de filtration (104), une première voie de sortie (107b) connectée au conduit de renvoi (109) et une deuxième voie de sortie (107c) connectée au canal d'injection (108).

8. Système d'injection selon la revendication précédente, tel que la vanne (107) comprend un mécanisme d'ouverture/fermeture sélective de la première voie de sortie (107b) et de la deuxième voie de sortie (107c), ledit mécanisme étant commandé par une unité de contrôle électronique (ECU) apte, d'une part, à fermer la première voie de sortie (107b) et à ouvrir la deuxième voie de sortie (107c) quand ladite caractéristique représentative de la qualité de la solution aqueuse mesurée par le capteur de qualité (110) est dans une plage de valeurs de référence et, d'autre part, à ouvrir la première voie de sortie (107b) et à fermer la deuxième voie de sortie (107c) de la vanne (107) quand ladite caractéristique représentative de la qualité de la solution aqueuse mesurée par le capteur de qualité (110) est en dehors d'une plage de valeurs de référence.

9. Système d'injection selon la revendication 6, **caractérisé en ce qu'**il comprend en outre :
- une première vanne (201) présentant une première voie d'entrée (201a) et une première voie de sortie (201b), la première voie d'entrée (201a) étant connectée à la sortie (104b) du circuit de filtration (104), la première voie de sortie (201b) étant connectée au conduit de renvoi (109),
- une seconde vanne (202) présentant une seconde voie d'entrée (202a) et une seconde voie de sortie (202b), la seconde voie d'entrée (202a) étant connectée à la sortie (104b) du circuit de filtration (104), la seconde voie de sortie (202b) étant connectée au canal d'injection (108).

10. Système d'injection selon la revendication précédente, tel que la première vanne (201) et la seconde vanne (202) comprennent respectivement un mécanisme d'ouverture/fermeture de la première voie de sortie (201b) et de la seconde voie de sortie (202b), lesdits mécanismes d'ouverture/fermeture étant commandés par une unité de contrôle électronique (ECU) apte, d'une part, à fermer la première voie de sortie (201b) de la première vanne (201) et à ouvrir la seconde voie de sortie (202b) de la seconde vanne (202) quand une caractéristique représentative de la qualité de la solution aqueuse mesurée par le capteur de qualité (110) est dans une plage de valeurs de référence et, d'autre part, à ouvrir la première voie de sortie (201b) de la première vanne (201) et à fermer la seconde voie de sortie (202b) de la seconde vanne (202) quand une caractéristique représentative de la qualité de la solution aqueuse mesurée par le capteur de qualité (110) est en dehors d'une plage de valeurs de référence.

11. Procédé d'injection d'une solution aqueuse dans un moteur à combustion pour véhicule automobile comprenant les étapes successives suivantes :
a) Pomper la solution aqueuse contenue dans un réservoir (100),
b) Envoyer ladite solution aqueuse pompée dans un circuit de filtration (104) comprenant un moyen de déminéralisation (105),
c) Mesurer au moins une valeur d'une caractéristique de la solution aqueuse à la sortie du circuit de filtration (104),
d) Renvoyer la solution aqueuse dans le réservoir (100) et reprendre le procédé à l'étape a) si la valeur mesurée à l'étape c) est en dehors d'une plage de valeurs de référence, sinon aller à l'étape e),
e)
e1) Injecter la solution aqueuse dans le moteur ou
e2) mesurer au moins une valeur d'une caractéristique de la solution aqueuse dans le réservoir (100),
f) Reprendre le procédé à l'étape a) si la valeur mesurée à l'étape e2) est en dehors d'une plage de valeurs de référence, sinon arrêter le procédé.

## Patentansprüche

1. System zum Einspritzen einer wässrigen Lösung in einen Verbrennungsmotor für Kraftfahrzeuge, wobei das System einen Behälter (100) für die wässrige Lösung, ein Mittel zum Einspritzen der wässrigen Lösung aus dem Behälter (100) in einen Filterkreislauf (104), der den Behälter (100) mit mindestens einer Einspritzdüse des Verbrennungsmotors verbindet, aufweist, wobei das System ferner aufweist:
- ein Mittel zur Rezirkulation der wässrigen Lösung im Filterkreislauf (104), wobei die Rezirkulation der wässrigen Lösung eine geschlossene Zirkulation der wässrigen Lösung vom Behälter (100) durch einen Filter (105) und zum Behälter (100) ist, und
- eine Vorrichtung zur Charakterisierung der wässrigen Lösung, mit der mindestens ein Merkmal der wässrigen Lösung gemessen werden kann, **dadurch gekennzeichnet, dass**:
die Charakterisierungsvorrichtung mindestens einen Qualitätssensor (110) aufweist, der ein Merkmal messen kann, das für die Qualität der wässrigen Lösung an einem Ausgang (104b) des Filterkreislaufs repräsentativ ist, wobei das System in Abhängigkeit von dem gemessenen Merkmal ermöglicht, die wässrige Lösung in den Motor einzuspritzen oder die wässrige Lösung im Filterkreislauf (104) zu rezirkulieren.

2. Einspritzsystem nach Anspruch 1, derart, dass der Qualitätssensor (110) geeignet ist, die elektrische Leitfähigkeit der wässrigen Lösung zu messen.

3. Einspritzsystem nach Anspruch 1 oder 2, aufweisend einen weiteren Qualitätssensor (103), der geeignet ist, ein Merkmal der wässrigen Lösung in dem Behälter (100) zu messen.

4. Einspritzsystem nach einem der vorhergehenden Ansprüche, derart, dass der Filterkreislauf (104) ein Mittel zur Demineralisierung (105) der wässrigen Lösung aufweist.

5. Einspritzsystem nach dem vorhergehenden Anspruch, derart, dass das Mittel zur Demineralisierung (105) der wässrigen Lösung ein Ionenaustauscherharz aufweist.

6. Einspritzsystem nach einem der vorhergehenden Ansprüche, derart, dass das Mittel zur Einspritzung der wässrigen Lösung eine Pumpe (102) und einen Weg (108) zur Einspritzung der wässrigen Lösung in mindestens eine Einspritzdüse des Verbrennungsmotors aufweist, und derart, dass das Mittel zur Rückführung der wässrigen Lösung eine Pumpe (106) und eine Leitung (109) zur Rückführung der wässrigen Lösung in den Behälter (100) aufweist, wobei vorzugsweise die Pumpe (102) des Mittels zur Einspritzung auch die Pumpe (106) des Mittels zur Rückführung der wässrigen Lösung ist.

7. Einspritzsystem nach dem vorhergehenden Anspruch, **dadurch gekennzeichnet, dass** es ferner ein Ventil (107) aufweist, das einen Einlassweg (107a), der mit dem Auslass (104b) des Filterkreislaufs (104) verbunden ist, einen ersten Auslassweg (107b), der mit der Rückführleitung (109) verbunden ist, und einen zweiten Auslassweg (107c), der mit dem Einspritzweg (108) verbunden ist, aufweist.

8. Einspritzsystem nach dem vorhergehenden Anspruch, derart, dass das Ventil (107) einen Mechanismus zum selektiven Öffnen/Schließen des ersten Auslasswegs (107b) und des zweiten Auslasswegs (107c) aufweist, wobei der Mechanismus von einer elektronischen Steuereinheit (ECU) gesteuert wird, die in der Lage ist, zum einen, den ersten Auslassweg (107b) zu schließen und den zweiten Auslassweg (107c) zu öffnen, wenn das Merkmal, das die vom Qualitätssensor (110) gemessene Qualität der wässrigen Lösung repräsentiert, innerhalb eines Bereichs von Referenzwerten liegt, und andererseits den ersten Auslassweg (107b) zu öffnen und den zweiten Auslassweg (107c) des Ventils (107) zu schließen, wenn das Merkmal, das die vom Qualitätssensor (110) gemessene Qualität der wässrigen Lösung repräsentiert, außerhalb eines Bereichs von Referenzwerten liegt.

9. Einspritzsystem nach Anspruch 6, **dadurch gekennzeichnet, dass** es ferner aufweist:
- ein erstes Ventil (201) mit einem ersten Einlassweg (201a) und einem ersten Auslassweg (201b), wobei der erste Einlassweg (201a) mit dem Auslass (104b) des Filterkreislaufs (104) verbunden ist und der erste Auslassweg (201b) mit der Rückführleitung (109) verbunden ist,
- ein zweites Ventil (202) mit einem zweiten Einlassweg (202a) und einem zweiten Auslassweg (202b), wobei der zweite Einlassweg (202a) mit dem Auslass (104b) des Filterkreislaufs (104) verbunden ist und der zweite Auslassweg (202b) mit dem Einspritzweg (108) verbunden ist.

10. Einspritzsystem nach dem vorhergehenden Anspruch, derart, dass das erste Ventil (201) und das zweite Ventil (202) jeweils einen Mechanismus zum Öffnen/Schließen des ersten Auslasswegs (201b) und des zweiten Auslasswegs (202b) aufweisen, wobei die Öffnungs-/Schließmechanismen von einer elektronischen Steuereinheit (ECU) gesteuert werden, die in der Lage ist, zum einen, den ersten Auslassweg (201b) des ersten Ventils (201) zu schließen und den zweiten Auslassweg (202b) des zweiten Ventils (202) zu öffnen, wenn ein Merkmal, das für die vom Qualitätssensor (110) gemessene Qualität der wässrigen Lösung repräsentativ ist, in einem Bereich von Referenzwerten liegt, und andererseits, den ersten Auslassweg (201b) des ersten Ventils (201) zu öffnen und den zweiten Auslassweg (202b) des zweiten Ventils (202) zu schließen, wenn ein Merkmal, das für die Qualität der von dem Qualitätssensor (110) gemessenen wässrigen Lösung repräsentativ ist, außerhalb eines Bereichs von Referenzwerten liegt.

11. Verfahren zum Einspritzen einer wässrigen Lösung in einen Verbrennungsmotor für Kraftfahrzeuge, das die folgenden aufeinanderfolgenden Schritte aufweist:
a) Abpumpen der in einem Behälter (100) enthaltenen wässrigen Lösung,
b) Leiten der gepumpten wässrigen Lösung in einen Filterkreislauf (104), der ein Mittel zur Demineralisierung (105) aufweist,
c) Messen mindestens eines Werts eines Merkmals der wässrigen Lösung am Ausgang des Filterkreislaufs (104),
d) Rückführen der wässrigen Lösung in den Behälter (100) und Wiederaufnahme des Verfahrens in Schritt a), wenn der in Schritt c) gemessene Wert außerhalb eines Bereichs von Referenzwerten liegt, andernfalls weiter mit Schritt e),
e)
e1) Einspritzen der wässrigen Lösung in den Motor oder
e2) Messen mindestens eines Werts einer Eigenschaft der wässrigen Lösung in dem Behälter (100),
f) Wiederaufnehmen des Verfahrens in Schritt a), wenn der in Schritt e2) gemessene Wert außerhalb eines Bereichs von Referenzwerten liegt, andernfalls Abbrechen des Verfahrens.

## Claims

1. A system for injecting an aqueous solution into a combustion engine for a motor vehicle, said system comprising a tank (100) for the aqueous solution, means for injecting the aqueous solution from the tank (100) into a filtration circuit (104) connecting the tank (100) to at least one injector of the combustion engine, said system further comprising:
- means of recirculating the aqueous solution in the filtration circuit (104), wherein the recirculation of the aqueous solution is a closed-loop circulation of the aqueous solution from the tank (100) through a filter (105) and to the tank (100) and
- an aqueous solution characterization device for measuring at least one characteristic of the aqueous solution, **characterized in that** the characterization device includes at least one quality sensor (110) capable of measuring a characteristic representative of the quality of the aqueous solution at an outlet (104b) of the filtration circuit,
said system allowing, depending on the said measured characteristic, to inject the aqueous solution into the engine or to recirculate the aqueous solution in the filtration circuit (104).

2. The injection system according to claim 1, such that the quality sensor (110) is capable of measuring the electrical conductivity of the aqueous solution.

3. The injection system according to claim 1 or 2, comprising another quality sensor (103) capable of measuring a feature of the aqueous solution in the tank (100).

4. The injection system according to any one of the preceding claims, such that the filtration circuit (104) comprises means for demineralizing (105) the aqueous solution.

5. The injection system according to the preceding claim, such that the means for demineralizing (105) the aqueous solution comprises an ion exchange resin.

6. The injection system according to any one of the preceding claims, such that the means for injecting the aqueous solution comprises a pump (102) and an injection channel (108) of the aqueous solution to at least one injector of the combustion engine, and such that the means for recirculating the aqueous solution comprises a pump (106) and a return duct (109) of the aqueous solution into the tank (100), preferably the pump (102) of the means for injecting is also the pump (106) of the means for recirculating the aqueous solution.

7. The injection system according to the preceding claim, **characterized in that** it further comprises a valve (107) comprising an inlet channel (107a) connected to the outlet (104b) of the filtration circuit (104), a first outlet channel (107b) connected to the return duct (109) and a second outlet channel (107c) connected to the injection channel (108).

8. The injection system according to the preceding claim, such that the valve (107) comprises a selective opening/closing mechanism of the first outlet channel (107b) and the second outlet channel (107c), said mechanism being controlled by an electronic control unit (ECU) capable of closing the first outlet channel (107b) and opening the second outlet channel (107c) when said characteristic representative of the quality of the aqueous solution measured by the quality sensor (110) is within a range of reference values and, on the other hand, to open the first outlet channel (107b) and to close the second outlet channel (107c) of the valve (107) when said characteristic representative of the quality of the aqueous solution measured by the quality sensor (110) is outside a range of reference values.

9. The injection system according to claim 6, **characterised in that** it further comprises:
- a first valve (201) having a first inlet channel (201a) and a first outlet channel (201b), the first inlet channel (201a) being connected to the outlet (104b) of the filtration circuit (104), the first outlet channel (201b) being connected to the return duct (109),
- a second valve (202) having a second inlet channel (202a) and a second outlet channel (202b), the second inlet channel (202a) being connected to the outlet (104b) of the filtration circuit (104), the second outlet channel (202b) being connected to the injection channel (108).

10. The injection system according to the preceding claim, such that the first valve (201) and the second valve (202) comprise respectively an open/close mechanism for the first outlet channel (201b) and the second outlet channel (202b), said opening/closing mechanisms being controlled by an electronic control unit (ECU) capable of closing the first outlet channel (201b) of the first valve (201) and opening the second outlet channel ( 202b) of the second valve (202) when a characteristic representative of the quality of the aqueous solution measured by the quality sensor (110) is within a range of reference values and, on the other hand, to open the first outlet path (201b) of the first valve (201) and to close the second outlet path (202b) of the second valve (202) when a characteristic representative of the quality of the aqueous solution measured by The quality sensor (110) is outside a reference range.

11. A method for injecting an aqueous solution into a combustion engine for a motor vehicle comprising the following successive steps:
a) Pumping the aqueous solution contained in a tank (100),
b) Sending said pumped aqueous solution into a filtration circuit (104) comprising a means for demineralization (105),
c) Measuring at least one value of a characteristic of the aqueous solution at the outlet of the filtration circuit (104),
d) Returning the aqueous solution to the tank (100) and repeat the method at step (a) if the value measured in step (c) is outside a range of reference values, otherwise go to step (e),
e)
(e1) Injecting the aqueous solution into the engine, or
(e2) measuring at least one value of a characteristic of the aqueous solution in the tank (100),
f) Resuming the method at step (a) if the value measured in step e2) is outside a range of reference values, otherwise stop the method.
